# EUROPÄISCHE PATENTSCHRIFT

(11) **EP 1 293 154 B1**
(45) Veröffentlichungstag und Bekanntmachung des Hinweises auf die Patenterteilung: **28.07.2004**
(21) Anmeldenummer: 02405788.7
(22) Anmeldetag: 11.09.2002
(51) Int. Cl.: A47J 47/14, A47J 39/00, A47J 39/02, B60H 1/18

(54) **Vorrichtung zum Warmhalten und Transportieren von Speisen mittels eines Motorfahrzeuges**
Device for keeping warm and transporting food products with a motor vehicle
Dispositif pour tenir chaud et transporter des aliments avec un véhicule à moteur

(30) Priorität: 14.09.2001 CH 16982001
(43) Veröffentlichungstag der Anmeldung: 19.03.2003
(73) Patentinhaber: Delzanno, Roberto, 6953 Pregassona (CH); Delzanno, Lorenzo, 6953 Pregassona (CH)
(72) Erfinder: Delzanno, Roberto, 6953 Pregassona (CH); Delzanno, Lorenzo, 6953 Pregassona (CH)
(74) Vertreter: Gaggini, Carlo, Dipl.Ing.

(56) Entgegenhaltungen:
- DE-U- 9 411 346
- US-A- 5 582 095

## Beschreibung

Die vorliegende Erfindung betrifft eine Vorrichtung zum Warmhalten und Transportieren von Speisen, insbesondere von Pizzas, vom Hersteller zum Konsumenten mittels eines Motorfahrzeugs gemäss dem Oberbegriff des Anspruchs 1

Der Transport von Speisen, insbesondere von Pizzas, mittels eines Transportfahrzeugs (sei es ein Auto oder ein Motorrad) ist gebräuchlich geworden, besonders in Städten. Damit verspricht man sich raschen Transport, bei dem die transportierten Speisen vor allem heiss und mit allen Eigenschaften von Duft und Geschmack ankommen, die sie im Moment der Fertigstellung aufwiesen. Insbesondere Pizzas, welche am häufigsten als fertige Speise mit Fahrzeugen transportiert werden, sind besonders heikel hinsichtlich des Problems von Duft und Geschmack: die Feuchtigkeitszunahme durchweicht sie schnell und nimmt ihnen die Knusperigkeit und eine ihrer wichtigsten Eigenschaften, nämlich den Duft. Daraus folgt, dass die Kontrolle der Luftfeuchtigkeit wahrend des Produkttransportes für das gute Gelingen des Transports eine entscheidende Rolle spielt.

Verschiedene Vorschläge zur Losung dieses Problems sind heute bekannt. So ist beispielsweise das einfachste praktisch angewendete System jenes, die zu transportierenden Speisen in eine wärmeisolierte Tasche zu stecken. Dieses System verursacht wenig Kosten, weist jedoch schwere Nachteile auf, weil die Temperatur des Produktes rasch abnimmt, wodurch die Feuchtigkeit entsprechend zunimmt. Die so verschickte Pizza präsentiert sich daher durchweicht und an der Grenze der Essbarkeit. Vor allem verursacht dieses System schwere Hygiene-Probleme, weil die Taschen schwierig zu reinigen sind, so dass sie leicht zu Nährboden für schädliche Bakterien werden.

Gleiches gilt für isolierte Behälter und Schachteln aus Kunststoff: im praktischen Gebrauch weisen sie die gleichen Nachteile auf wie die Warmhaltetaschen, von denen sie sich bestenfalls durch leichtere Reinigung unterscheiden.

Aus der Patentliteratur und aus der Praxis sind sodann technologisch fortschrittlichere Lösungen für dieses Problem bekannt, wie beispielsweise jene gemäss der EP-0481352A oder der EP-0575471 A1.

Im ersteren Fall wird eine Vorrichtung gezeigt zum Transportieren und Warmhalten von Speisen, insbesondere von Pizzas, deren Behälter einen unteren Teil und einen oberen Teil aufweist, wobei der untere Teil als funktioneller Teil ausgebildet ist, der einen Ventilator und eine Heizvorrichtung sowie eine Entfeuchtungskammer enthalt. Nur schon die Tatsache, dass die Vorrichtung eine Entfeuchtungskammer benötigt, zeigt die Grenzen dieser Lösung auf: Die Luftführung im Behälterraum ist so ausgelegt, dass die Luft mittels einer Feuchtigkeit aufnehmenden Substanz entfeuchtet werden muss (beispielsweise Kleie, wie dies als Beispiel angeführt ist) Unterstrichen wird die Problematik dieser Losung, indem vorgeschlagen wird, dass ein Thermostat und ein Hygrometer zum Regeln der Temperatur und der Feuchtigkeit der zirkulierenden Luft vorzusehen sei: Dies alles macht die Auslegung der Vorrichtung kompliziert und heikel, und damit ungeeignet für täglichen praktischen Gebrauch.

Die EP-0575471A1, Äquivalent der PCT-WO92/16137, zeigt eine Lösung einer auch aus der Praxis bekannten Transportvorrichtung, nämlich der Speisenerwärmung mittels eines Benzinbrenners. Im Luftkreislauf im Behälter ist ein in einer separaten Kammer untergebrachter Wärmetauscher eingefügt, der mit einem Radiator oder mit einer Elektroheizung oder mit einem Benzinbrenner ausgelegt ist. Mit einer Vorrichtung solcher Art kann die Temperatur im Behälter über lange Zeit konstant gehalten werden, wobei jedoch das zentrale Problem der Feuchtigkeitskotrolle nicht gelöst ist, so dass die Qualität des Produkts darunter leidet. Ferner weisen die Vorrichtungen dieser Art, von denen jene mit dem Benzinbrenner die bekannteste ist, eine ganze Reihe weiterer Nachteile auf, wie hohe Betriebskosten, grösseren Lärm, Brandgefahr, problematische Hygiene, usw. Insbesondere stört, dass die im Behälter zirkulierende Luft nicht filtriert wird, so dass sie schädliche Partikel mit sich trägt, die sich auf den transportierten Speisen ablagern können.

Alle diese bis jetzt bekannten Systeme, bei welchen ein Wärmetauscher, der seine Warmeenergie auf irgendeine Weise erhält (beispielsweise aus dem Kühlsystem des Fahrzeugs, wie in der EP-0628277A1 beschrieben oder auch - analog zur Beschreibung in der GB-2316739A - aus dem Abgas des Fahrzeugs), in einer separaten Kammer des eigentlichen Speisenbehälters untergebracht ist, nehmen sich der richtigen Luftzirkulation im Behälter und der korrekten Wärmeisolation nicht speziell an, sondern sehen lediglich einen isolierten Kasten vor, in dem die Gestellbretter für die Speisen eingebaut sind. Deshalb ist die Luftfeuchtigkeit nicht genügend kontrolliert, und die Speisen, insbesondere die Pizzas, nehmen zu viel Feuchtigkeit auf und weichen sich während des Transportes auf.

Eine Vorrichtung nach dem Oberbegriff des Anspruchs 1 ist aus US-A-5 582 095 bekannt.

Die vorliegende Erfindung schlägt deshalb vor, in welcher Art eine Vorrichtung zum Warmhalten von Speisen auszulegen ist, indem ein thermisch isolierter Behälter gezeigt wird, in welchem die Luftzirkulation so ausgelegt ist, dass die oben erwähnten Nachteile der bisher bekannten Lösungen überwunden werden, und dass eine gleichbleibende Temperatur (von mindestens 130°C) und eine genaue Feuchtigkeitskontrolle im Behälter gewährleistet ist, wobei die strengsten Hygienevorschriften rigoros eingehalten werden

Diese Zielsetzungen werden erfüllt mit einer Vorrichtung gemäss dem Oberbegriff des Patentanspruchs 1 mit den Eigenschaften gemäss dem kennzeichnenden Teil dieses Patentanspruchs 1. Dank der generellen Auslegung des Behälters als Kasten, in dessen Wänden ein Luft-Zwischenraum vorhanden ist für die fortlaufende Zufuhr von Frischluft von aussen, die fortlaufend durch eine Öffnung im Boden des Behälters entweicht, und dank der möglichst freien Luftzirkulation im Innern des Behälters - wobei dafür gesorgt ist, dass alle unnötigen Hindernisse ausgeschaltet werden - ergeben sich gleichbleibend ideale Bedingungen für das Wärmen der Speisen.

Natürlich setzt dieser Vorgang voraus, dass genügend Wärme verfügbar ist, was bedeutet, dass der vorgesehene Wärmetauscher das nötige Mindestmass an Wärmeleistung aufbringen kann. Dies lässt sich mit allen Arten von Wärmetauschern erreichen, bevorzugt ist jedoch jene Lösung, bei der als Wärmequelle die Wärmeenergie der Abgase des Automotors verwendet wird, wobei nach bekannter Art, und wie in der erwähnten GB-2316739A beschrieben, dort allerdings nicht in direktem Zusammenhang mit Speisen. In der nicht veröffentlichten Schweizer Patentanmeldung Nr. 1999 1264/99 vom 9.7.99 ist ein Fahrzeug beschrieben, in welchem ein Ofen für Speisen beschrieben ist, der mit den Abgasen des Fahrzeugmotors beheizt wird, ganz wie es für eine bevorzugte Ausführungsform der vorliegenden Erfindung vorgesehen ist.

Die Ansprüche 2 bis 10 betreffen bevorzugte Ausführungsformen des Erfindungsgegenstandes, die zusammen mit ihren Vorteilen im Folgenden unter Bezugnahme auf verschiedene, in den Abbildungen dargestellte Ausführungsbeispiele gemäss der vorliegenden Erfindung beschrieben werden. Es zeigen die:
- Fig. 1: In rein schematischer Darstellung ein Automobil, in welchem die erfindungsgemässe Vorrichtung eingebaut ist, wobei hier angenommen ist, dass die Warme zur Versorgung des Wärmetauschers der Vorrichtung mit Warmeenergie aus dem Abgas des Fahrzeugmotors geliefert wird;
- Fig. 2: Eine vergrösserte, jedoch wiederum schematische Darstellung der Vorrichtung gemäss der Fig. 1 in einem Längsschnitt in einer Vertikalebene parallel zur Langsachse des Automobils.

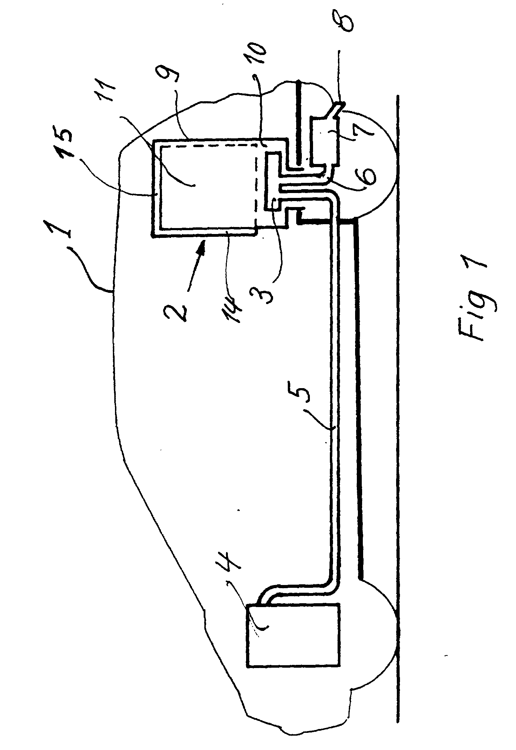

In der Fig. 1 bezeichnet 1 den Umriss eines Motorfahrzeugs, das hier im Sinn eines Beispiels als Kastenwagen gewählt ist. Dieser Fahrzeugtyp erweist sich erfahrungsgemäss als ideal für den Einbau der erfindungsgemässen Vorrichtung, da der hintere Teil des Fahrzeugs beste Bedingungen bezüglich Laderaum und Verankerung für die Befestigung des kastenförmigen Behälters bietet. Solche Fahrzeuge weisen im Allgemeinen die für die Verankerung der erfindungsgemässen Vorrichtung erforderlichen Befestigungspunkte auf, wie die Verankerungspunkte für Sicherheitsgurten, für die hinteren Sitze, Verstärkungstraversen, usw.: Dies ist in der Fig. 1 nicht besonders angedeutet, da jeder Fachmann auf dem Gebiet diesen Aspekt kennt. Die Wahl eines Kastenwagens ist jedoch nicht als Beschränkung auf diesen Typ auszulegen: Die erfindungsgemässe Vorrichtung (die im Folgenden der Kürze halber "Speisenwarmer" genannt wird) kann vielmehr an jeder Art von Motorfahrzeug angebracht werden, d.h. auf Fahrzeugen mit (mindestens) vier Rädern, drei oder zwei Rädern, also auch Motorrädern bzw. Motorrollern, wie dies übrigens bereits in der erwähnten, nicht publizierten Schweizer Patentanmeldung Nr. 1999 126/99 dargestellt ist. Wichtig ist lediglich, dass das Fahrzeug für den Speisenwärmer genügend Raum bietet, und dass dieser solid befestigt werden kann (mittels Schrauben, Klammern, usw.).

Im hinteren Teil des Motorfahrzeugs 1 ist im Bereich der Hinterräder bzw. der Rücksitze des Automobils die erfindungsgemässe Vorrichtung zum Warmhalten und Transportieren von Speisen angeordnet, bestehend aus einem wärmeisolierten Behälter 2, in dessen unterem Teil ein Wärmetauscher 3 angeordnet ist. Der Wärmetauscher 3, der aus einer ausseren Wärmequelle gespeist wird, (bestehend aus einem Radiator des Kühlers des Motorfahrzeugs, einer von der Fahrzeugbatterie gespeisten elektrischen Widerstandsheizung, einem separaten Benzinbrenner wie er beispielsweise in der PCT/W092/16137 gezeigt ist, oder - wie in der Fig. 1 schematisch dargestellt und wie gemäss einer bevorzugten Ausführungsform der vorliegenden Erfindung vorgesehen - durch die Abgase des Motors 4, die mittels des Rohrs 5 in den Wärmetauscher geführt und durch das Rohr 6 aus demselben in den Auspufftopf und das Auspuffrohr 8 abgeführt wird), muss lediglich eine im Verhältnis zur Grösse des Behälters bzw. dem Volumen der zu transportierenden Speisen genügende Heizleistung aufweisen. Dieser muss also in der Lage sein, eine genügende Wärmemenge ins Innere des Behälters abzugeben, um in dessen Innerem eine Temperatur von mindestens 130°C zu gewahrleisten. Das Festlegen der Art und der Wärmekapazität des Wärmetauschers 3 stützt sich auf die praktische Erfahrung des Fachmanns auf dem Gebiet. Hier sei lediglich erwähnt, dass sich die Wahl eines Wärmetauschers, der den Wärmeinhalt der Abgase eines Fahrzeugs mit einem Verbrennungsmotor (sei es ein Auto oder ein Motorrad) ausnutzt, als ideal erwiesen hat, da er erlaubt, von einer reichlich und praktisch kostenlos verfügbaren Wärmequelle Gebrauch zu machen, da die Wärme der Abgase eines Motors normalerweise in der Atmosphäre verpufft, die dadurch erwärmt wird. Die Erfahrung hat gezeigt, dass das Ausnutzen der Abgase eines Verbrennungsmotors zum Beheizen einer erfindungsgemässen Vorrichtung (eines Speisenwärmers) die Leistung des Motors verbessert, unter der Voraussetzung allerdings, dass der Wärmetauscher bestimmten konstruktiven Kriterien genügt, die hier nicht weiter zu erklären sind, weil sie mit der eigentlichen Substanz der vorliegenden Erfindung nichts zu tun haben. Festzuhalten ist jedoch, dass im Rahmen der vorliegenden Erfindung die einzige Bedingung für den Wärmetauscher 3 darin besteht, dass er eine genügende Wärmeleistung aufbringt, die von Fall zu Fall in Abhängigkeit vom Volumen des Behälters 2, der Menge der zu transportierenden Speisen, von der vorgesehenen Transportdauer, usw., festzulegen ist.

Hingegen ist es wichtig, festzustellen, dass die Wärme mittels einfacher Wärmeleitung und Wärmestrahlung an die Luft abzugeben ist, die sich im Behälter 2 befindet: Dabei soll keinerlei Austausch zwischen dem Medium, das die Wärme liefert (Gas, Luft, Wasser oder anderes Medium), und der Luft im Behälter stattfinden, damit jegliche Gefährdung des zu transportierenden Produktes vermieden wird

Der Behalter 2 muss verschiedenen genau definierten Anforderungen genügen, damit die vorliegende Erfindung realisiert werden kann.

Vor allem muss er die Form einer Kiste bzw. eines Kastens 9 von im Wesentlichen quadratischer Form aufweisen, in deren Boden 10 der Wärmetauscher 3 eingebaut ist. Unter dem Begriff Boden ist nicht notwendigerweise eine geschlossenen Oberfläche zu verstehen, sondern der untere Teil des Kastens 9, der vom Inneren des Kastens 9, auch innere Kammer 11 genannt, mittels eines gelochten und langs allen seiner Seiten offenen Bleches 12 getrennt sein kann

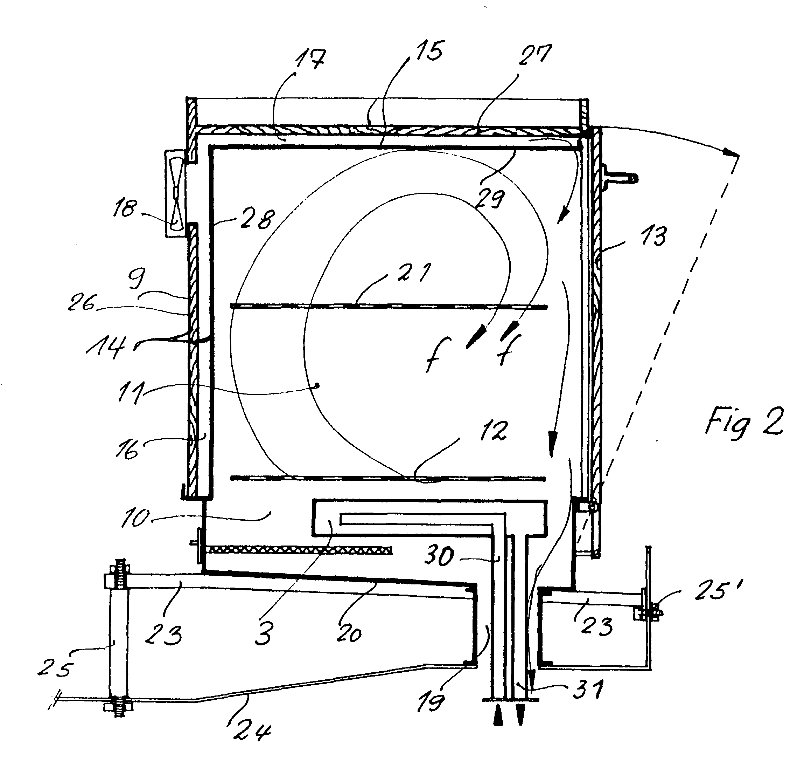

Eine der vier Seitenwände des Kastens 9 muss sodann an den Kasten 9 angelenkt sein, beispielsweise unten im Bodenteil 10, so dass sie eine dicht abschliessende Zugangstüre 13 zum Behälter 2 bildet. Um die Dichtigkeit zu gewährleisten, können die Türe 13 bzw. der Flügel des Behälters 2 mit einer geeigneten elastischen und hitzebeständigen Dichtung versehen sein. Die restlichen drei Seitenwände (von denen in den Figuren 1 und 2 nur eine sichtbar ist, nämlich die der Zugangstüre 13 gegenüberliegende Rückwand 14) und die Decke 15 des Kastens 9 sind als doppelte Wände ausgebildet, die einen Luft-Zwischenraum 16, 17 einschliessen (vergleiche auch die Fig. 2). Diese Luft-Zwischenräume 16, 17 (von denen bloss zwei der vier in der Fig. 2 sichtbar sind), sind alle seitlich untereinander, und vorne gegen die Zugangstüre 13 mit dem Innenraum 11 des Behälters 2 verbunden. Zwischen dem Luft-Zwischenraum 16, 17 und dem Innenraum 11 des Behälters 2 kann sich somit ein fortlaufender Luftwechsel ausbilden, der weiter durch die Einwirkung mindestens eines Blasventilators 18 verstärkt wird, wie dies im Folgenden erklärt wird, der vorzugsweise in der senkrechten Rückwand 14 angeordnet ist. Ferner ist der Innenraum 11 des Behälters 2 mit der Umgebung über eine Durchgangsöffnung 19 verbunden, die sich auf der Unterseite 20 im Bodenteil 10 des Behälters 2 befindet.

Die Anordnung mit dem Luft-Zwischenraum 16, 17, der Verbindung der Zwischenräume mit dem Innenraum 11, der Luft-Ausgangsöffnung 19, und mit mindestens einem Blas-Ventilator 18 haben den für die vorliegende Erfindung fundamental wichtigen Zweck, die gewünschten Resultate zu erreichen, indem im Innern der Kammer 11 ein Luftkreislauf erzeugt wird, der um horizontale Achsen kreisende Wirbel bildet. Im Behälter 2 entsteht somit ein Luftstrom, der aus den Luft-Zwischenräumen 16, 17 durch die bei der Zugangstüre 13 bestehenden Verbindung in den Innenraum 11 gelangt und nachher durch die Auslassöffnung 19 auf der Unterseite 20 des Behälters 2 nach aussen entweicht. Damit die Ausbildung dieses kreisenden Luftstroms im Innenraum 11 nicht durch abschliessende Trennwände behindert wird, ist gemäss der Erfindung vorgesehen, dass die Gestellbretter, welche die Speisen 21 tragen (sowie 12, welcher einen Abstützträger bildet), in solcher Weise ausgebildet sind, dass sie eine möglichst freie Luftzirkulation ermöglichen: Die Gestellträger 12, 21, wie in der Fig. 2 dargestellt, erstrecken sich daher nicht so weit hinaus, dass sie die Innenwände der innern Kammer 11 berühren, wobei zwischen den Gestellträgern 12, 21 und den Innenwänden reichlich Zwischenraum frei bleibt. Ferner sind, gemäss einer bevorzugten Ausführungsform der vorliegenden Erfindung, die Gestellbretter aus gelochtem Blech (vergleiche die Fig. 2) hergestellt.

Dank dieser systematischen Luftversorgung mit Frischluft von aussen, die mittels des Ventilators 18 eingeblasen wird, mit fortlaufender Wärmezufuhr aus dem Wärmetauscher 3, mit der Bildung von Luftwirbeln im Innern der Kammer 11, die in der Fig. 2 mit den Pfeilen f angedeutet sind, und mit fortlaufender Abfuhr heisser und feuchter Luft durch die Ausgangsöffnung 19, ergeben sich die Vorteile der erfindungsgemässen Vorrichtung. Die auf den Gestellbrettern 12, 21 einer solchen Vorrichtung transportierten Speisen bleiben heiss und knusperig, selbst wenn der Transport Stunden dauert, wie wenn sie soeben aus dem Ofen gekommen wären, nämlich dank der dauernden Zufuhr von genügend Wärme, und dank der guten Wärmeisolation des Kastens 9, der den Behälter bildet, und dank der Auslegung des Kastens 9, welche die Ausbildung die beschriebene Luftzirkulation im Innern gewährleistet. Dies sind die Zielsetzungen, die dank der beschriebenen konstruktiven Eigenschaften des Behälters 2 erreicht werden.

In der Fig. 2 ist auch ein Gestellträger 23 zu erkennen, der mittels Schrauben 25 bzw. 25' am Blech 24 befestigt ist, das Teil der Karosserie des Fahrzeugs ist. Selbstverständlich unterscheiden sich diese Befestigungselemente 24, 25, 25, 26 von einem Wagentyp zum andern, d.h. diese Elemente müssen jedem Wagentyp angepasst werden, auf dem die erfindungsgemässe Vorrichtung montiert werden soll (sei es ein Automobil oder ein Motorrad). Es ist Sache des Fachmanns auf dem Gebiet, zu diesem Zweck die am besten geeigneten Verankerungspunkte des Fahrzeugs zur Befestigung der Vorrichtung auszuwählen, allenfalls in Zusammenarbeit mit dem Hersteller des Motorfahrzeugs. Im besten Fall kann das Motorfahrzeug mit speziellen Verankerungspunkten für eine serienmässige Vorrichtung gemäss der vorliegenden Erfindung ausgerüstet sein, wodurch der Einbau der Vorrichtung weniger kostspielig würde. Gemäss einer bevorzugten Ausführungsform der vorliegenden Erfindung sind die äusseren seitlichen Wände 26 (nur eine von den dreien ist dargestellt) und der äusseren Deckflache 27 des Kastens 9 aus Holz oder aus einem Material mit holzähnlichen Eigenschaften gefertigt, während die Innenwände 28, 29, die den Luft-Zwischenraum bilden, aus Metall, vorzugsweise Stahlblech hergestellt sind. Die Verwendung von Holz oder holzähnlichen Werkstoffen für die Aussenwände 26, 27 des Kastens 9 (einschliesslich der Türe 13) erweist sich als optimal, um eine perfekte Isolation nach aussen zu gewährleisten, zu welcher Eigenschaft die Vorteile geringer Kosten und eines ansprechenden Anblicks hinzukommen.

Gemäss einer weitern Ausführungsform der vorliegenden Erfindung, die in den Abbildungen nicht dargestellt ist, sind in der senkrechten Ruckwand 14 des Kastens 9 mindestens zwei Blas-Ventilatoren 18 symmetrisch zu einer senkrechten Mittelebene des Kastens 9 angeordnet, nämlich im oberen Teil dieser Wand. Die beschriebene Anordnung mit mindestens zwei Blas-Ventilatoren 18 erlaubt eine bessere Ausbildung der Luftzirkulation im Innern des Kastens 9, nämlich in dem Sinne, dass eine bessere Symmetrie des Luftstroms über die ganze Breite des Kastens erreicht wird: Dies ist besonders wichtig, wenn die Breite des Kastens 9 gleich oder grösser als 80 cm gewahlt wird, wie dies für erfindungsgemässe Behälter 2 zutrifft, die quer im Kofferraum oder Gepäckabteil eines Motorfahrzeugs eingebaut werden.

Hier sei bereits festgehalten, dass der Behälter 2 im Motorfahrzeug mittels Schrauben 25, 25' befestigt wird, die ihn auf einer Auflageflache 23 bzw. an der unteren Wand der Karosserieschale 24 befestigen.

Gemäss einer bevorzugten Ausführungsform der vorliegenden Erfindung ist sodann vorgesehen, dass diese Befestigungspunkte bereits als normale Verankerungspunkte für Sicherheitsgurten und/oder die hinteren Sitze und/oder der Verstärkungstraversen der Karosserie des Motorfahrzeugs vorhanden sind. Der Vorteil einer solchen Anordnung liegt auf der Hand und bedarf keiner weiteren Erklärung.

Gemäss einer weiteren bevorzugten Ausführungsform der vorliegenden Erfindung dient die Durchgangsöffnung 19 im Bodenteil 20 des Behälters 2 auch zur Durchführung der Zu- und Ableitungsrohre 30 bzw. 31 für das Heizmedium des Wärmetauschers 3. Damit wird vermieden, dass unnötige Durchgangsöffnungen durch den Bodenteil 20 des Behälters 2 geschaffen werden müssen, wobei die Rohre 30 und 31 gegenüber dem Behälter 2 kleine Bewegungen frei ausführen können. Diese Lösung ist besonders nützlich, wenn die Rohre 30 und 31 Teil der Auspuffanlage des Motorfahrzeugs sind, deren Verrohrung in jedem Fall von der Karosserieschale des Fahrzeugs getrennt angeordnet wird.

Gemäss einer weiteren bevorzugten Ausführungsform der vorliegenden Erfindung ist vorgesehen, dass der Behälter 2 äussere Abmessungen innerhalb der folgenden Grenzen aufweist: Breite zwischen 50 und 100 cm, Tiefe zwischen 40 und 60 cm, Hohe zwischen 30 und 70 cm: Innerhalb dieser Grenzen lassen sich Behälter realisieren, die sich sowohl für Personenwagen, Lieferwagen, als auch Motorräder eignen, wobei man sich die Notwendigkeit der Rationalisierung des Transportes vergegenwärtigen muss, die verlangt, dass grosse Mengen an Speisen auf einmal transportiert werden- wie dies die Kapazität der erfindungsgemässen Vorrichtung erlaubt - sowie die Schwierigkeiten des Verkehrs in grossen städtischen Agglomerationen, welche die Verwendung auch kleiner Fahrzeuge sowie von zwei- oder dreirädrigen Motorrädern nahe legen. Die Wahl des bestgeeigneten Fahrzeugs, in das die erfindungsgemässe Vorrichtung eingebaut werden soll, richtet sich also auch nach den Abmessungen des Behälters 2 und hängt demnach von einem Kompromiss zwischen der Transportkapazität des Fahrzeugs und den örtlichen Verkehrsverhältnissen ab. Dank den Eigenschaften der vorliegenden Erfindung liegen keine eigentlichen Begrenzungen der Kapazität der realisierbaren Behälter 2 vor: Es genügt, eine genügend starke Energiequelle für den Wärmetauscher 3 bereitzustellen. Die günstigste Wahl hängt daher eher vom vorgesehenen Verwendungszweck dieser Behälter ab, d.h. von den Transportbedingungen, die zu erfüllen sind. Die vorliegende Erfindung ermoglicht dem Anwender, die optimale Lösung zu wählen, ohne Einschränkungen wegen der Art des Transportes und/oder der Länge der zurückzulegenden Transportstrecke, da dank der erfindungsgemässen Vorrichtung die transportierten Speisen, und insbesondere die sehr heiklen Pizzas, in ihrer Qualität über stundenlange Zeiträume unverändert bleiben

Weiter ist zu Bemerken, dass dank der Anordnung, dass die innere Kammer 11 stets unter dem vom Blas-Ventilator 18 erzeugten Druck steht, jede Gefahr der Bildung von Kohlenmonoxyd im Innenraum des Motorfahrzeugs ausgeschlossen ist, auch unter dem äusserst unwahrscheinlichen Vorkommnis, dass der mit den Abgasen des Automobils betriebene Wärmetauscher 3 lecken sollte. Gleicherweise stellt der Überdruck in der inneren Kammer 11, so gering er in Bar gemessen ist, in bester Weise sicher, dass unangenehme Gerüche, die von den transportierten Speisen ausgehen, sowie Verunreinigungen wie Keime und Bakterien ausgeschaltet werden.

### Liste der in den Figuren verwendeten Bezugsziffern

- 1: Motorfahrzeug
- 2: Behälter
- 3: Wärmetauscher
- 4: Verbrennungsmotor
- 5: Zuleitung
- 6: Abgasleitung
- 7: Auspufftopf
- 8: Auspuffrohr
- 9: Kasten
- 10: Boden
- 11: Innere Kammer
- 12: Lochblech
- 13: Zugangsture
- 14: Rückwand
- 15: Decke
- 16: Luft-Zwischenraum
- 17: Luft-Zwschenraum
- 18: Blas-Ventilator
- 19: Durchgangsöffnung
- 20: Unterer Teil des Bodens
- 21: Gestellträger
- 22: Gestelltrager
- 23: Abstützfläche
- 24: Blech
- 25, 25': Schrauben
- 26: Äussere Seitenwände
- 27: Äussere Deckenfläche
- 28: Innenwand
- 29: Innenwand
- 30: Zufuhrrohr
- 31: Auspuffohr

## Patentansprüche

1. Vorrichtung zum Warmhalten und Transportieren von Speisen, insbesondere Pizzas, vom Hersteller zum Konsumenten, mittels eines Motorfahrzeugs mit einem wärmeisolierten Behälter (2), in dessen unterem Teil ein Wärmetauscher (3) vorgesehen ist, mittels welchem die Wärme aus einer äusseren Quelle an die Luft im Behälter (2) durch Wärmeleitung und Wärmestrahlung übertragen wird, wobei
der Behälter (2) die Form eines im Wesentlichen quadratischen Kastens (9) aufweist, in dessen Bodenteil (10) ein Wärmetauscher (3) eingebaut ist, **dadurch gekennzeichnet, dass**
- eine der vier Seitenwände des Kastens (9) am Kasten angelenkt ist, um eine abgedichtete Zugangstüre (13) zum Behälter (2) zu bilden,
- die übrigen drei Seitenwände (14) und die Decke (15) des Kastens (9) als doppelte Wände ausgebildet sind, die Luft-Zwischenräume (16, 17) in sich einschliessen, die seitlich untereinander verbunden sind und die nach vorn, gegen die Zugangstüre (13) hin mit der inneren Kammer (11) des Behälters (2) verbunden sind,
- die innere Kammer (11) des Behälters (2) durch eine im unteren Teil (20) des Bodens (10) angeordnete Durchgangsöffnung (19) mit der Umgebung verbunden ist,
- im Innern der in den übrigen Wänden und der Decke gebildeten Luft-Zwischenraume Luft von aussen durch mindestens einen Blas-Ventilator (18) eingeblasen wird, der vorzugsweise in der hinteren Seitenwand (14) angeordnet ist, damit ein Luftstrom erzeugt wird, der durch die Luft-Zwischenräume (16, 17) und durch die Verbindungsstelle bei der Zugangstüre (13) in die innere Kammer (11) strömt und durch die im untern Teil (20) des Behälters (2) angebrachte Auslassöffnung (19) entweicht, wobei die innere Kammer (11), in der die zu transportierenden Speisen untergebracht sind, mit Gestellbrettern (12, 21) versehen ist, welche die Kammer jedoch nicht in einzelne Zonen unterteilen, sondern eine freie Luftzirkulation unter Ausbildung von Luftwirbeln erlauben.

2. Vorrichtung gemäss dem Anspruch 1,
**dadurch gekennzeichnet, dass**
die äusseren Seitenwände (26) und die äussere Deckfläche (27) des Kastens (9) aus Holz oder aus einem holzähnlichen Material gefertigt sind, während die inneren Wände (28, 29), welche die Luft-Zwischenräume bilden, aus Metall, vorzugsweise aus Stahlblech bestehen.

3. Vorrichtung gemäss dem Anspruch 1,
**dadurch gekennzeichnet, dass**
der Wärmetauscher (3) mit Wärmeenergie aus den Abgasen des Verbrennungsmotors (4) des Motorfahrzeugs versorgt wird.

4. Vorrichtung gemäss dem Anspruch 1,
**dadurch gekennzeichnet, dass**
das Motorfahrzeug ein Automobil mit einem Laderaum oder mit einem Kofferraum ist, in welchem die erfindungsgemässe Vorrichtung eingebaut ist.

5. Vorrichtung gemäss dem Anspruch 1,
**dadurch gekennzeichnet, dass**
das Motorfahrzeug ein zweiräderiges Motorrad ist, auf welchem die Vorrichtung auf einem hinter dem Sattel des Fahrers angeordneten Gepäckträger montiert ist.

6. Vorrichtung gemäss dem Anspruch 1,
**dadurch gekennzeichnet, dass**
die Gestellbretter (12, 21) aus gelochtem Blech gefertigt sind, und dass zwischen den Rändern der Gestellträger (12, 21) und den Innenwänden der Kammer (11) ein Raum frei bleibt, dessen Breite so bemessen ist, dass sich eine Luftstromzirkulation im Innern der Kammer (11) ausbilden kann.

7. Vorrichtung gemäss dem Anspruch 1,
**dadurch gekennzeichnet, dass**
mindestens zwei Blas-Ventilatoren (18) vorgesehen sind, die vorzugsweise in der hinteren Seitenwand (14) des Kastens (9), und insbesondere im oberen Teil dieser Wand angeordnet sind.

8. Vorrichtung gemäss dem Anspruch 1,
**dadurch gekennzeichnet, dass**
der Behälter (2) fest mit dem Motorfahrzeug verbinden ist, wobei von den im Fahrzeug normalerweise ohnehin vorgesehenen verstärkten Stellen Gebrauch gemacht wird, welche die Verankerungsstellen der Sicherheitsgurten und/oder der hinteren Sitze und/oder der Verstärkungstraversen der Karosserieschale bilden.

9. Vorrichtung gemäss dem Anspruch 1,
**dadurch gekennzeichnet, dass**
die im Bodenteil (20) des Behälters (2) angebrachte Durchgangsöffnung (19) zugleich als Durchgangsöffnung für die Zufuhrrohre (30) und die Abfuhrrohre (31) für das Heizmedium des Wärmetauschers dient.

10. Vorrichtung gemäss den Ansprüchen 1 und 4,
**dadurch gekennzeichnet, dass**
der Behälter (2) die folgenden Aussenabmessungen aufweist:
- eine Breite zwischen 50 und 100 cm,
- eine Tiefe zwischen 40 und 60 cm,
- eine Höhe zwischen 30 und 70 cm.

## Claims

1. Apparatus for keeping warm and transporting meals, in particular pizzas, from the manufacturer to the consumer, by means of a motor vehicle having a heat-insulated container (2), in the lower part of which a heat exchanger (3) is provided by means of which the heat from an external source is transferred to the air in the container (2) by thermal conduction and thermal radiation, wherein the container (2) has the form of a substantially square box in the base (10) of which a heat exchanger (3) is installed,
**characterised in that**
- one of the four side walls of the box (9) is hinged to the box to form a sealed access door (13) to the container (2),
- the remaining three side walls (14) and the roof (15) of the box (9) are formed as double walls which include intermediate air spaces (16, 17) in them, which are laterally connected to one another and which are connected towards the front, towards the access door (13), to the inner chamber (11) of the container (2),
- the inner chamber (11) of the container (2) is connected to the environment by a through opening (19) arranged in the lower part (20) of the base (10),
- air is blown in from the outside in the interior of the intermediate air spaces formed in the remaining walls and in the ceiling, by at least one pusher fan (18), which is preferably arranged in the rear side wall (14), so that an airflow is produced which flows through the intermediate air spaces (16, 17) and through the connection at the access door (13) into the inner chamber (11) and escapes through the outlet opening (19) provided in the lower part (20) of the container (2), with the inner chamber (11) in which the meals to be transported are accommodated, being provided with rack boards (12, 21) which do not, however, subdivide the chamber into individual zones, but rather permit a free air circulation with the formation of air eddies.

2. Apparatus in accordance with claim 1,
**characterised in that**
the outer side walls (26) and the outer covering surface (27) of the box (9) are manufactured of wood or of a wood-like material, whereas the inner walls (28, 29), which form the intermediate air spaces, consist of metal, preferably of sheet steel.

3. Apparatus in accordance with claim 1,
**characterised in that**
the heat exchanger (3) is supplied with thermal energy from the exhaust gases of the internal combustion engine (4) of the motor vehicle.

4. Apparatus in accordance with claim 1,
**characterised in that**
the motor vehicle is a motor car having a load space or a boot in which the apparatus in accordance with the invention is installed.

5. Apparatus in accordance with claim 1,
**characterised in that**
the motor vehicle is a two-wheeled motorcycle on which the apparatus is installed on a luggage carrier arranged behind the driver's seat.

6. Apparatus in accordance with claim 1,
**characterised in that**
the rack boards (12, 21) are manufactured from perforated sheet metal and **in that** a free space remains between the edges of the rack carriers (12, 21) and the inner walls of the chamber (11), the width of the space being so dimensioned that an air circulation can form in the interior of the chamber (11).

7. Apparatus in accordance with claim 1,
**characterised in that**
at least two pusher fans (18) are provided which are preferably arranged in the rear side wall (14) of the box (9), and in particular in the upper part of this wall.

8. Apparatus in accordance with claim 1,
**characterised in that**
the container (2) is fixedly connected to the motor vehicle, with use being made of the reinforced points which are in any event normally provided in the vehicle, which form anchoring points of the safety belts and/or of the rear seats and/or of the reinforcing crossmembers of the body shell.

9. Apparatus in accordance with claim 1,
**characterised in that**
the through opening (19) formed in the base (20) of the container (2) simultaneously serves as the through opening for the supply tubes (30) and the discharge tubes (31) for the heating medium of the heat exchanger.

10. Apparatus in accordance with claims 1 and 4,
**characterised in that**
the container (2) has the following external dimensions:
- a width between 50 and 100 cm,
- a depth between 40 and 60 cm,
- a height between 30 and 70 cm.

## Revendications

1. Dispositif pour maintenir chauds et porter des aliments, notamment des pizzas, du fabricant au consommateur, au moyen d'un véhicule à moteur, comprenant un récipient (2) calorifugé dans la partie inférieure duquel est prévu un échangeur de chaleur (3) au moyen duquel la chaleur d'une source extérieure est transmise à l'air se trouvant dans le récipient par conduction de la chaleur et rayonnement de la chaleur, dans lequel
le récipient (2) a la forme d'une caisse sensiblement parallélépipédique dans la partie (10) de fond duquel est monté un échangeur de chaleur (3),
**caractérisé en ce que**
- l'une des quatre parois latérales de la caisse (9) est articulée à la caisse pour former une porte (13) d'accès étanche au récipient (2),
- les trois autres parois (14) latérales et le sommet (15) de la caisse (9) sont constituées en paroi double qui enferment des espaces (16, 17) intermédiaires d'air, qui communiquent latéralement entre eux et qui communiquent vers l'avant en direction de la porte (13) d'accès avec la chambre (11) inférieure du récipient (2),
- la chambre (11) intérieure du récipient (2) communique avec l'extérieur par une ouverture (19) de passage ménagée dans la partie (20) inférieure du fond (10),
à l'intérieur des espaces intermédiaires d'air formés dans les autres parois et le sommet, de l'air est insufflé de l'extérieur par au moins un ventilateur (18) d'insufflation qui est monté de préférence dans la paroi (14) latérale arrière afin de produire un courant d'air qui va en passant par les espaces (16, 17) intermédiaires d'air et par le point de communication pour la porte (13) d'accès, dans la chambre (11) inférieure et s'échappe par l'ouverture (19) de sortie ménagée dans la partie (20) inférieure du récipient, la chambre (11) intérieure, dans laquelle sont entreposés les aliments à porter, étant munie de planches (12, 21) de bâti, qui ne subdivisent pas cependant la chambre en des zones individuelles, mais qui permettent une circulation libre de l'air avec formation de tourbillons d'air.

2. Dispositif suivant la revendication 1,
**caractérisé en ce que**
les parois (26) latérales extérieures et la surface (27) extérieure du sommet de la caisse (9) sont en bois ou en une matière analogue au bois, tandis que les parois (28, 29) intérieures qui forment des espaces intermédiaires pour l'air sont en métal, de préférence en tôle d'acier.

3. Dispositif suivant la revendication 1,
**caractérisé en ce que**
l'échangeur de chaleur (3) est alimenté en énergie calorifique à partir des gaz d'échappement du moteur (4) à combustion interne du véhicule à moteur.

4. Dispositif suivant la revendication 1,
**caractérisé en ce que**
le véhicule à moteur est une automobile ayant un espace de chargement ou un espace de coffre dans lequel est monté le dispositif suivant l'invention.

5. Dispositif suivant la revendication 1,
**caractérisé en ce que**
le véhicule à moteur est un véhicule à moteur à deux roues, sur lequel le dispositif est monté sur un porte-bagages disposé derrière la selle du conducteur.

6. Dispositif suivant la revendication 1,
**caractérisé en ce que**
les planches (12, 21) de bâti sont en tôle perforée et **en ce qu'**il subsiste entre les bords des supports (12, 21) de bâti et les parois intérieures de la chambre (11), un espace dégagé dont la largeur est telle qu'il peut se former une circulation de courant d'air à l'intérieur de la chambre (11 ).

7. Dispositif suivant la revendication 1,
**caractérisé en ce qu'**il est prévu au moins deux ventilateurs (18) d'insufflation, qui sont disposés de préférence dans la paroi (14) latérale arrière de la caisse (9) et notamment dans la partie supérieure de cette paroi.

8. Dispositif suivant la revendication 1,
**caractérisé en ce que**
le récipient (1) est assemblé rigidement au véhicule à moteur, en tirant partie des emplacements renforcés présents de toute façon normalement dans le véhicule, qui forment les point d'ancrage des ceintures de sécurité et/ou des sièges arrière et/ou des traverses de renfort de la caisse de carrosserie.

9. Dispositif suivant la revendication 1,
**caractérisé en ce que**
l'ouverture (19) de passage ménagée dans la partie (20) de fond du récipient (2) sert en même temps d'ouverture de passage pour le tube (30) d'entrée et le tube (31) de sortie du fluide de chauffage de l'échangeur de chaleur.

10. Dispositif suivant les revendications 1 et 4,
**caractérisé en ce que**
le récipient (2) a les dimensions extérieures suivantes :
- une largeur comprise entre 50 et 100 cm,
- une profondeur comprise entre 40 et 60 cm,
- une hauteur comprise entre 30 et70 cm.
